# EUROPEAN PATENT SPECIFICATION

(11) **EP 3 672 863 B1**
(45) Date of publication and mention of the grant of the patent: **01.10.2025**
(21) Application number: 18848588.2
(22) Date of filing: 21.08.2018
(51) Int. Cl.: B62K 19/30, B62M 6/90, B62M 7/12

(54) **SUPPORTING STRUCTURE FOR A TWO WHEELED VEHICLE**
HALTEANORDNUNG FÜR EIN ZWEIRÄDRIGES FAHRZEUG
STRUCTURE DE SUPPORT POUR UN VÉHICULE À DEUX ROUES

(30) Priority: 22.08.2017 IN 201741029663
(43) Date of publication of application: 01.07.2020
(73) Proprietor: TVS Motor Company Limited, Chennai 600006 (IN)
(72) Inventor: RAWAT, Ankit, Chennai 600006 (IN); MEIBALAN, Mugilan, Chennai 600006 (IN); SUBRAMONIAM, Chithambaram, Chennai 600006 (IN)
(74) Representative: Patentanwaltskanzlei Matschnig & Forsthuber OG
(86) International application number: PCT/IB2018/056307
(87) International publication number: WO 2019/038667

(56) References cited:
- IN-A- 2319 CH2 007
- IN-A- 3923 DE2 014
- JP-A- 2014 189 144
- US-A- 5 524 726
- US-A1- 2012 080 254

## Description

### TECHNICAL FIELD

The present subject matter relates to a saddle-type vehicle. More particularly, the present subject matter relates to a supporting structure for an electric saddle-type vehicle.

### BACKGROUND

In recent times there is an increased demand to control emissions from automobiles, in view of stringent emission norms. As a result, a number of hybrid and electric vehicles are seeing the light of the day in order to minimize the amount of emissions. Typically, hybrid vehicles have distinct advantage of allowing long travel, as at least one source is always available to drive the vehicle.

Generally, existing hybrid vehicles configured to be powered either by an internal combustion engine or electric motor or both, are replacing normal engine powered vehicles. For example, driving on terrain or for long distances, an internal combustion engine can be used and for shorter distances electric propulsion system can be used. However, incorporation of both internal combustion engine and electric motor assembly in the hybrid saddle-type vehicle makes the system bulky and more complex. The vehicle's suspension, transmission, primary motor are designed for the additional weight of a redundant drive train and its fuel.

Thus, electric vehicles have gained popularity in recent years as the potential replacement for internal combustion vehicles, since they promise zero emission from electric drive system, and a break away from oil dependency. However, a pure electrically-driven saddle-type vehicle entails a problem in that its own weight increases, a traveling distance is short, and its traveling is impossible in the case where there is no battery charge and due to packaging constraints it is difficult to mount one or more batteries as an additional rechargeable back-up power source in the limited spaces of the vehicle which may involve further structural challenges for installing said one or more additional batteries thereon. Additionally, with the transition of vehicles from internal combustion engine to hybrid and hybrid to a pure electric vehicle, manufacturer needs to gear up to meet these challenges. Often depending on emission norms in different markets, manufacturers need to simultaneously produce vehicles with all three types of technologies including internal combustion engine, hybrid and electric vehicle at the same time and cater to usage requirements and ecosystem of respective markets. As manufacturer of transportation vehicles, it is a challenge to design and produce vehicles which can operate on different technologies or combination of different technologies e.g. frequently changing from hybrid to electric vehicle and vice-versa. This not only adds to the cost of manufacturing but also makes the entire production set-up complex in managing a platform of products with different technologies simultaneously. Different design of vehicles with different technologies also necessitates additional number of exclusive parts, increased number of assembly operations including complex assembly sequences and supply chain challenges. Additionally, there exist challenges in ensuring good ride & handling stability of the vehicle when it is an electric powertrain type as well as hybrid powertrain type. It is important to be able to design a base platform architecture which significantly retains it centre of gravity and weight disposition on the front axle and the rear axle so as to achieve a good dynamic characteristic of the vehicle with either of the powertrains.

Hence, there exists a need for an improved electric saddle-type vehicle which can be readily and quickly derived from the conventional hybrid saddle-type vehicle without carrying out any structural modification for the existing hybrid saddle -type vehicle layout. It is desirable to provide an improved electric saddle-type vehicle that balances the independencies of one or more components of the existing hybrid driven saddle type vehicle during conversion of the hybrid driven saddle type vehicle into a pure electric vehicle and vice-versa, thereby maintaining the weight distribution, centre of gravity as well the dynamic stability, ride and handling performance of the vehicle. Further, it is desirable to provide an improved electric saddle type vehicle in a manner that provides the consumer with an economical solution in terms of fuel efficiency as well as reduction in emissions. Document US5524726A shows a known saddle type vehicle in the art, said saddle type vehicle comprising:a frame extending along a vehicle longitudinal axis; a swing arm journaled to the frame and adapted to support a rear wheel, said swing arm includes at least one mounting boss, fixedly attached to at least a portion thereof;an electric motor coupled to the rear wheel and supplies a rotational driving force to the rear wheel; and one supporting structure, wherein said at least one mounting boss, of said swing arm is configured to removably mount: said at least one supporting structure, said at least one supporting structure being adapted for housing one or more energy storage devices, and said at least one supporting structure comprises one or more mounting portions integrally formed to at least a portion thereof; and said at least one supporting structure being removably mounted through said one or more mounting portions, to said at least one mounting boss of said swing arm.

### BRIEF DESCRIPTION OF THE DRAWINGS

The detailed description is described with reference to the accompanying figures. The same numbers are used throughout the drawings to reference like features and components.
**Fig.1** is a side view of a conventional saddle-type vehicle.
**Fig.2** is a perspective view of a pure electrically-driven saddle-type vehicle as per one embodiment of the present invention.
**Fig.3** is a perspective view of at least one supporting structure adapted for housing at least one auxiliary energy storage device therein, is removably mounted on a swing arm of the pure electrically-driven saddle-type vehicle of **Fig.2****,** as per one embodiment of the present invention.
**Fig.4** and **Fig.5** are an exploded view of at least one supporting structure adapted for housing said at least one auxiliary energy storage device therein, is removably mounted on a swing arm of the pure electrically-driven saddle-type vehicle of **Fig.2****,** as per one embodiment of the present invention.

### DETAILED DESCRIPTION

Hybrid vehicles offer consumers with an alternative to vehicles employing conventional internal combustion engines, transmissions, and drive trains which often exhibit relatively low fuel efficiency and/or produce undesirable emissions that are released during operation. A typical hybrid saddle-type vehicle combines a battery powered electric motor with an internal combustion engine. For example, in an existing hybrid saddle-type vehicle, for driving long distances, an internal combustion engine can be used and for shorter distances electric propulsion system can be used. However, in an existing hybrid saddle-type vehicle, said engine and an electric motor assembly mounted thereon increases the overall weight of the vehicle.

Hence, the vehicle manufacturers are increasingly focusing on vehicles having a pure electric drive which provides a cost effective, fuel efficient alternative to the conventional engine driven saddle-type vehicle. However, there are multiple problems, some of which have been identified above, which combine to make the pure electric vehicles impractical for most applications today. For example, vehicle range is a major problem. Further, due to limited space and packaging constraint for an existing saddle-type vehicle, the mounting of one or more rechargeable batteries as an additional power sources requires further structural modification in at least a portion of the vehicle which may then increase the overall weight and cost for the vehicle as well as may increase the variety of platform of vehicles, thereby making it difficult to manage production as well as changeover between the different models either by manufacturers or by the end users.

Thus, there is a need to have an optimum energy storage device so as to be able to use it flexibly between different technologies, for example, vehicle powered purely by internal combustion engine, vehicle powered by electric motor in addition to the internal combustion engine and vehicles powered purely by electric motor. Thus, there is need for a new modular platform architecture of the vehicle layout and structure which necessitates a modular and optimal energy pack size and thereby maximizes the flexibility of packaging the energy storage device in modular form, economy of vehicle cost, ease of access for charging, service. There is also a need to enable a swapping architecture of the energy storage device as well as maximizing travel distance before need for recharge.

Moreover, there continues to be an additional need to provide an improved pure electrically-driven saddle-type vehicle which can be easily derived from said existing hybrid saddle-type vehicle by installing one or more energy storage devices as a retro-fit application in an existing layout for hybrid saddle-type vehicle. Further, it is desirable to provide an improved electric saddle-type vehicle comprising of at least one energy storage device being configured to fit within the space and weight limitations of an engine mounting space of the existing hybrid saddle-type vehicle without bringing any structural changes in the existing layout of the hybrid saddle-type vehicle.

With the above objectives in view, the existing hybrid saddle-type vehicle is readily converted into a pure electrically-driven saddle-type vehicle and vice-versa. In one embodiment, the present invention describes an improved pure electrically driven saddle-type vehicle with an extended travelling range, power capacity and improved performance. Further, as per one embodiment of the present invention, said one or more energy storage devices can be readily installed in said improved pure electrically-driven saddle-type vehicle without bringing any structural innovation in the existing hybrid saddle-type vehicle layout.

As per one embodiment, the present invention relates to an improved pure electrically-driven saddle-type vehicle comprising of a low framework structure body frame having a floor board portion and a swing arm journaled to the frame and adapted to support a rear wheel. As per one embodiment of the present invention, said swing arm comprises a pair of lateral support portions surrounding a pivot, a first arm portion extending rearwardly from one lateral support portion of the pair of lateral support portions to a position along one lateral side of the rear wheel, a second arm portion extending rearwardly from other lateral support portion of the pair of lateral support portions to a position along other lateral side of the rear wheel, a cross-portion extending in the widthwise direction of the vehicle in order to connect the first arm portion to the second arm portion and one or more cross-members extending between said first arm portion and said second arm portion. In one embodiment, said swing arm includes at least one mounting boss fixedly attached to at least a portion thereof.

Further, as per one embodiment, a first mounting boss of said at least one mounting boss is fixedly attached to at least a portion of said one or more cross-members and a pair of second mounting bosses of said at least one mounting boss is fixedly attached to at least a portion of said cross-portions. Further, said pure electrically driven-saddle-type vehicle comprises an electric motor *incorporated into a hub body (or "hub") of the rear wheel and drives the hub directly. This type of motor is known as a hub motor.*

*Further, as per one embodiment, said* pure electrically driven-*saddle-type vehicle* comprises at least one primary energy storage device configured to supply a primary power to the electric motor. In one embodiment, said at least one primary energy storage device is disposed below said floor board portion. Referring to one embodiment, at least one supporting structure is adapted for housing at least one auxiliary energy storage device therein.

As per one embodiment, said at least one supporting structure is configured for being removably mounted on at least a portion of said swing arm through said at least one mounting boss. Further, as per one embodiment, said at least one auxiliary energy storage device is adapted to supply a secondary power to the electric motor and said at least one primary energy storage unit. Further, in one embodiment of the present invention, said at least one supporting structure includes a bottom wall, a pair of left and right side walls extending upward from two respective ends of said bottom wall in a vehicle longitudinal direction, a pair of front and rear walls extending upward from other two respective ends of said bottom wall in a vehicle width direction and an open top. In one embodiment, said bottom wall, said pair of left and right side walls and said pair of front and rear walls forms a housing portion structured to hold said at least one auxiliary energy device therein and said open top is configured for accessing said at least one auxiliary energy device being enclosed in said housing portion.

In one embodiment, said at least one supporting structure comprises at least one holder portion being integrally formed with at least a portion of one of said pair of front and rear side walls of said at least one supporting structure. Referring to one embodiment, said at least one holder portion is adapted for grasping said at least one supporting structure for lifting and maneuvering thereof. As per one embodiment, said at least a portion of said pair of front and rear walls and said pair of left and right side walls is configured to form a first cooling air intake structure and a second cooling air intake structure, respectively. Referring to one embodiment, the first cooling air intake structure and the second cooling air intake structure are adapted for guiding air to said at least one auxiliary storage device housed therein. In one embodiment, at least a portion of said pair of front and rear walls comprises one or more mounting portions fixedly attached to at least a portion thereof. In one embodiment, a pair of first mounting portions of said one or more mounting portions are fixedly attached through welding to at least a portion of a front wall of said pair of front and rear walls and a second mounting portion of said one or more mounting portions are fixedly attached through welding to at least a portion of a rear wall of said pair of front and rear walls. As per one embodiment, said one or more mounting portions includes at least one fastener receiving hole adapted to receive one or more fasteners for detachably securing said at least one supporting structure to said swing arm through said at least one mounting boss being fixedly attached to said swing arm of the vehicle. Referring to one embodiment, said at least one primary energy storage device and said at least one auxiliary energy storage device are rechargeable batteries. In one embodiment, said at least one primary energy storage device and said at least one auxiliary energy storage device are disposed in a line along a front-rear direction of said vehicle.

The object of the present invention is to provide an improved pure electrically driven saddle-type vehicle that can replace an internal combustion engine with one or more energy storage devices without bringing any structural modification in the existing hybrid driven saddle-type vehicle layout such that one or more energy storage devices are configured to be removably mounted within the space and weight limitations of the engine mounting space of the existing hybrid saddle-type vehicle. Thus, as per one embodiment, the present invention provides an improved pure electrically driven saddle-type vehicle that is designed with primary focus on ease of conversion, optimization of power generation and use.

The present invention describes an improved pure electrically driven saddle-type vehicle which can be readily retro-fittable into an existing hybrid saddle-type vehicle layout such that said electric vehicle includes said at least one supporting structure being removably mounted to said swing arm of the vehicle through said at least one mounting boss which was used previously in connection with the mounting of a power transmission system for the existing hybrid saddle-type vehicle configuration. Thus, in one embodiment, said at least one supporting structure adapted for housing said at least one auxiliary energy storage device which serves as a backup power source for driving the vehicle is disposed on at least a portion of the swing arm of the vehicle. In another embodiment of the present invention, said at least one auxiliary energy storage device provides an additional source of power for driving the electric motor and further contributing in an extended travelling range and improved performance of the vehicle.

According to the invention, said pure electrically-driven saddle-type vehicle derived from said existing hybrid saddle-type vehicle by detaching said engine from said swing arm on the vehicle and mounting said at least one supporting structure on said swing arm through said at least one mounting boss being fixedly attached on said at least a portion of the swing arm.

As per one embodiment, in conversion of said existing hybrid saddle-type vehicle into said pure electric vehicle and vice versa, said at least one supporting structure with said at least one auxiliary energy device housed therein is mounted in the space on the swing arm which was previously required for the mounting of said engine in hybrid saddle-type vehicle configuration. Thus, said mounting of said at least one supporting structure adapted to house said at least one auxiliary energy storage device therein enhances the balance of the vehicle by maintaining the rearward position of the vehicle center of gravity of the vehicle and thereby facilitating the desired weight distribution between the front and rear axles of the vehicle.

Referring to one embodiment, at least one supporting structure adapted to hold said at least one auxiliary energy storage device therein is removably mounted to said swing arm of the vehicle such that said at least one supporting structure does not touch said utility box being disposed below the seat assembly, thereby maintaining the optimum storage space of the utility box. Thus, said hybrid saddle-type vehicle is readily converted into said pure electrically-driven saddle-type vehicle through mounting of an additional energy sources in the form of said at least one auxiliary energy storage device on the vehicle without bringing any structural modification in the existing hybrid saddle-type vehicle layout.

It is an object of the present invention to provide a novel electrical drive assembly for said pure electrically-driven saddle-type vehicle which includes said at least one primary energy storage device and said at least one auxiliary energy storage device. In one embodiment, said at least one primary energy storage device and said at least one auxiliary storage device are adapted to facilitate a long travelling range and improved performance for the vehicle.

The present invention describes an improved pure electrical saddle-type vehicle which comprises an electric motor that is incorporated into a hub body (or "hub") and drives the hub directly. In one embodiment, the hub-type electric motor comprises a shape corresponding to a hub of the rear wheel. In one embodiment, by utilizing a hub motor, the need for a transmission, driveline, differential, and connecting axles are eliminated. Advantageously, as per one embodiment, said hub motor generate high torque at low rotations per minute (RPM) which translates to less weight, less complexity, and better efficiency. Further, as per one embodiment, the hub-type electric motor being mounted to the rear wheel removes power during regenerative braking to recharge said at least one primary energy storage device and said at least one auxiliary energy storage device being disposed on the vehicle. As per one embodiment of the present invention, said improved electric vehicle can take the advantage of techniques such as regenerative braking and suspension to recover energy normally lost during braking/road excitation oscillations as electricity to be restored to the on-board said at least one primary energy storage device and said at least one auxiliary energy storage device.

In the present invention, said one or more energy storage devices comprises of at least two configurations including a first configuration and a second configuration. In one embodiment, said at least one primary energy storage device and said at least one auxiliary energy storage device comprises of said first configuration including a dimensional ratio between length, height and width which is equal to 1: 1.1: 3.1 with a tolerance range of ± 10%. For example, as per one embodiment said at least one primary storage device of predetermined length in the range of 90 mm to 110 mm includes a predetermined height in the range of 99 mm to 121 mm and predetermined width in the range of 279 mm to 331 mm, for example, said at least one primary storage device of predetermined length of 100 mm includes a predetermined height of 110 mm and the predetermined width of 310 mm This specific aspect ratio provides for optimum energy storage density and packaging efficiency in a saddle type vehicle. In another embodiment of the present invention, said second configuration of said one or more energy devices comprises a dimensional ratio between the length, the height and the width which is equal to 1: 1.05: 1.7 with a tolerance range of ± 10%. As per the one embodiment of the present invention, at least four of said one or more energy storage devices with the first configuration when taken together is equivalent in size to at least one of said one or more energy storage devices with the second configuration. In one embodiment, the number of energy storage device to be configured into said at least supporting structure ranges from 1 to 6 depending on the net mass balance so as to substantially achieve similar centre of gravity of the vehicle when the vehicle is being changed from one powertrain to other. Moreover, said specified size of said one or more energy storage devices enables ease of service and swapping thereof either individually or together or both individually as well as together, thereby providing an improved solution to the problem of being stranded during riding and resolve all cited problems as well as enable having a flexible architecture platform to offer variety of products with minimum cost impact.

Further, as per one embodiment of the present invention, the installation of said one or more energy storage devices with one of said at least two configuration depends on the customer requirements for achieving an enhanced vehicle performance such as extending the range of the vehicle by installing an additional said at least one auxiliary energy storage device on the vehicle , design flexibility in at least a portion of the vehicle to accommodate said one or more energy devices therein and one or more variants of the vehicle, for example, the vehicle powered by the engine, the electric motor or both requiring the installation of said one or more energy storage devices on the vehicle. Further, as per one embodiment of the present invention, the installation of said one or more energy storage devices with said first configuration involves simple packaging in the limited available space on the vehicle.

The present invention provides an improved layout of said pure electrically-driven saddle-type vehicle which is derived from said existing hybrid saddle-type vehicle by replacing said engine mounted on the swing arm by said at least one supporting structure. In one embodiment, said at least one mounting boss being fixedly attached through welding to at least a portion of said swing arm to mount said engine in said hybrid saddle-type vehicle configuration is utilized in removably mounting said at least one supporting structure on the vehicle. In another embodiment, said at least one mounting boss being removably attached through fastening to at least a portion of said swing arm to mount said engine in said hybrid saddle-type vehicle configuration is utilized in removably mounting said at least one supporting structure on the vehicle. Thus, according to the invention, said hybrid saddle-type vehicle when retrofitted with said at least one supporting structure in said engine mounting space by detaching said engine from swing arm, is converted into said pure electrically-driven saddle-type vehicle. Thus, said pure electrically-driven saddle-type vehicle including said at least one primary energy storage device being disposed below said floorboard portion and said at least one auxiliary energy storage device being mounted on said swing arm provides a long travelling range and improved performance for the vehicle.

Various other features and advantages of the invention are described in detail below with reference to the accompanying drawings. In the drawings, like reference numbers generally indicate identical, functionally similar, and/or structurally similar elements. The drawing in which an element first appears is indicated by the leftmost digit(s) in the corresponding reference number. With reference to the accompanying drawings, wherein the same reference numerals will be used to identify the same or similar elements throughout the several views. It should be noted that the drawings should be viewed in the direction of orientation of the reference numerals.

It is to be noted that in the ensuing description, the present invention is usable in a saddle type vehicle exemplified in the form of a hybrid saddle type vehicle.

Further "front" and "rear", and "left" and "right" referred to in the ensuing description of the illustrated embodiment refer to front and rear, and left and right directions as seen in a state of being seated on a seat of the saddle-type vehicle. Furthermore, a longitudinal axis refers to a front to rear axis relative to the vehicle, while a lateral axis refers to a side to side, or left to right axis relative to the vehicle. Also, it is to be understood that the phraseology and terminology used herein is for the purpose of description and should not be regarded as limiting.

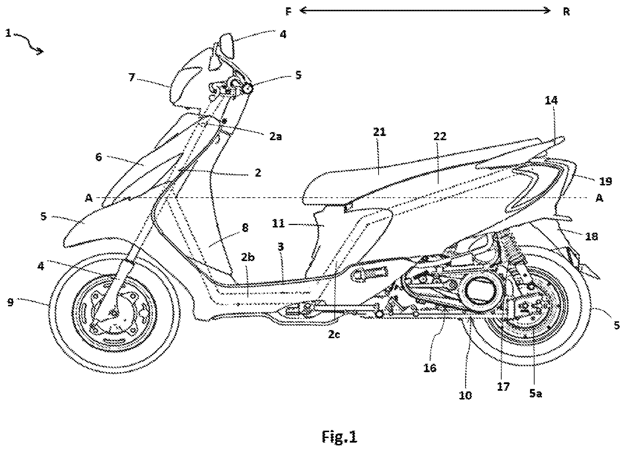

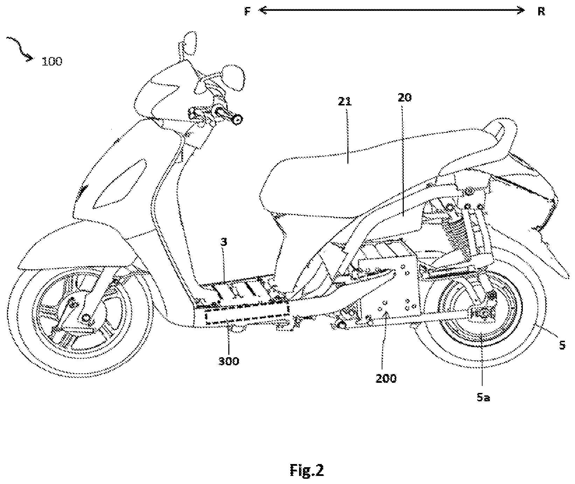

With reference to **FIG.1****,** a description is made of a conventional hybrid saddle-type vehicle (hereinafter "vehicle"). The vehicle **(1)** illustrated, has a low framework structure body frame **(2)** having a floor board portion **(3).** The low framework structure body frame **(2)** includes a head tube **(2a),** a main tube **(2b)** and a pair of side frames **(2c).** Particularly, the main tube **(2b)** extends downwards from an anterior portion of the head tube **(2a)** and then extends rearwards in an inclined manner. Thus, the frame **(2)** extends from a front portion **(F)** to a rear portion **(R)** of the vehicle **(1)** along a vehicle longitudinal direction **(AA).** The vehicle **(1)** further includes a plurality of body panels for covering the frame **(2)** and is mounted thereto. The plurality of body panels includes a front panel **(6),** a leg shield **(8),** an under-seat cover **(11),** and a left and a right-side panel **(22).** Further, a seat assembly **(21)** is disposed above said under-seat cover **(11),** and is mounted to the main tube **(2b)**. A utility box **(20)** (shown in Fig.2) is disposed below the seat assembly **(21).** A pillion handle **(14)** is disposed behind said seat assembly **(21).** A rear fender **(18)** for covering at least a portion of a rear wheel **(5)** is positioned below a fuel tank (not shown). One or more suspension(s)/shock absorbers **(17)** are provided in the rear portion **(R)** of said vehicle **(1)** for comfortable ride. Further, said vehicle **(1)** comprises of plurality of electrical and electronic components including a headlight **(7),** a taillight **(19),** a transistor controlled ignition (TCI) unit (not shown), a starter motor (not shown) and the like. A touch screen LCD unit (not shown) is provided on a handle bar **(5)** to display various operating modes, power flow pattern and warning signals. A pair of left and right rear view mirrors **(4)** are mounted on the right and left sides of the handle bar **(5).** In one embodiment, said vehicle **(1)** is also provided with hazard lamps (not shown).

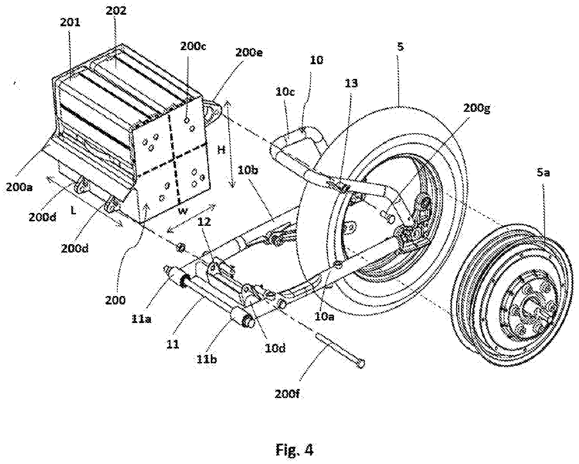

Further in **Fig.1****,** an internal combustion engine **(16),** hereinafter "engine", is arranged behind said floor board portion **(3)** and supported between the pair of side frames **(2c).** According to the invention, said internal combustion engine **(16)** is removably disposed on a swing arm **(10)** through at least one mounting boss **(12), (13)** (shown in Fig.4) being fixedly attached therein. The swing arm **(10)** is attached to a lower portion of the main tube **(2b)** by means of a toggle link (not shown). The other end of the swing arm **(10)** holds the rear wheel **(5).** The rear wheel **(5)** and the swing arm **(10)** are connected to the pair of side frames **(2c)** by a pair of shock absorbers **(17)** provided on either side of the vehicle **(1).** Further, said vehicle **(1)** includes a hub-type electric motor **(5a)** mounted on a hub of the rear wheel **(5).** The vehicle **(1)** is configured to be propelled either by the engine **(16)** alone or by the electric motor **(5a)** alone or by both engine **(16)** and electric motor **(5a)** simultaneously. At zero vehicle speed, a rider can select any of the following four operating drive modes with the help of a mode switch. The four operating drive modes of the vehicle **(1)** are: (a) a sole engine mode where engine **(16)** alone powers the vehicle **(1),** (b) a sole motor mode where the electric motor **(5a)** alone powers the vehicle **(1),** (c) a hybrid power mode wherein the engine **(16)** and the electric motor(5a) together power the vehicle **(1),** (d) a hybrid economy mode wherein only the engine **(16)** or only the electric motor **(5a)** or both power the hybrid vehicle **(1)** depending on the vehicle operating conditions. In other words, the rear wheel **(5)** of the vehicle **(1)** is driven by either the engine (16) alone or by the motor **(5a)** alone or by both the engine **(16)** and the motor (5a) simultaneously.

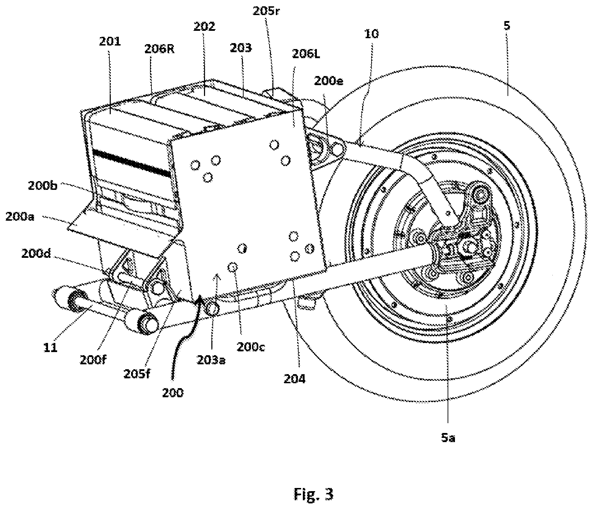

**Fig.2** is a perspective view of a pure electrically-driven saddle-type vehicle **(100)** derived from said existing hybrid saddle-type vehicle **(1)** of **Fig.1** as per one embodiment of the present invention. In one embodiment, said pure electrically-driven saddle-type vehicle **(100)** comprises of said at least one supporting structure **(200)** adapted to house at least one auxiliary energy storage device **(201), (202)** (shown in Fig.3) and being configured to be removably mounted on the swing arm **(10)** through at least one mounting boss **(12), (13)** (shown in Fig.4) being fixedly attached therein, as per one embodiment of the present invention. In one embodiment, said vehicle **(100)** includes the electric motor **(5a)** mounted on the hub of the rear wheel **(5).** According to the invention, said vehicle **(100)** comprises said at least one primary energy storage device **(300)** configured to supply a primary power to the electric motor **(5a)** and said at least one primary energy storage device **(300)** is disposed below said floor board portion **(3).** In one embodiment, said at least one supporting structure **(200)** adapted for housing said at least one auxiliary energy storage device **(201), (202)** therein, is configured for being removably mounted on at least a portion of said swing arm **(10)** through said at least one mounting boss **(12), (13).**

Further in **Fig.2****,** referring to one embodiment, said at least one supporting structure **(200)** adapted to hold said at least one auxiliary energy storage device **(201), (202)** therein, is removably mounted to said swing arm **(10)** on the vehicle such that said at least one supporting structure (200) do not touch said utility box **(20)** being disposed below the seat assembly **(21),** thereby maintaining optimum storage capacity of the utility box **(20).** As per one embodiment, said at least one auxiliary energy storage device **(201), (202)** is adapted to supply a secondary power to the electric motor (5a) and said at least one primary energy storage device **(300).** Further, said at least one primary energy storage device **(300)** and said at least one auxiliary energy storage device **(201), (202)** are rechargeable batteries. In one embodiment said at least one primary energy storage device **(300)** and said at least one auxiliary energy storage device **(201), (202)** are disposed in a line along the front-rear direction of said vehicle **(100).**

**Fig. 3** illustrates said at least one supporting structure **(200)** adapted for housing said at least one auxiliary energy storage device **(201), (202)** therein, as per one embodiment of the present invention. As per one embodiment, said vehicle **(100)** includes the electric motor **(5a)** mounted on the hub of the rear wheel **(5).** The swing arm **(10)** is journaled to the frame **(2)** and adapted to support the rear wheel (5). In one embodiment, said swing arm **(10)** includes said at least one mounting boss **(12), (13)** (shown in **Fig.4**) fixedly attached to at least a portion thereof. Referring to one embodiment, said at least one supporting structure **(200)** removably mounted on said swing arm of the vehicle **(100)** and said hub-type an electric motor **(5a)** coupled to the rear wheel **(5)** supplies a rotational driving force to the rear wheel **(5).** In one embodiment, said at least one supporting structure (200) includes the bottom wall **(204),** said pair of left and right side walls **(206L), (206R)** extending upward from two respective ends of said bottom wall **(204)** in a vehicle longitudinal direction, said pair of front and rear walls **(205f), (205r)** extending upward from other two respective ends of said bottom wall **(204)** in a vehicle width direction and an open top **(203).** As per one embodiment, said bottom wall **(204),** said pair of left and right side walls **(206L), (206R)** and said pair of front and rear walls **(205f), (205r)** forms the housing portion **(203a)** structured to hold said at least one auxiliary energy device therein and said open top (203) is configured for accessing said at least one auxiliary energy device **(201), (202)** being enclosed in said housing portion **(203a).** In one embodiment, said at least one supporting structure **(200)** comprises at least one holder portion **(200b)** being integrally formed with at least a portion of one **(205f)** of said pair of front and rear side walls **(205f), (205r)** of said at least one supporting structure **(200).** Further, said at least one holder portion **(200b)** is adapted for grasping said at least one supporting structure **(200)** for lifting and maneuvering thereof. Referring to one embodiment, said at least a portion of said pair of front and rear walls **(205f), (205r)** and said pair of left and right side walls **(206L) (206R)** is configured to form a first cooling air intake structure **(200a)** and a second cooling air intake structure **(200c),** respectively. The first cooling air intake structure **(200a)** and the second cooling air intake structure **(200c)** are adapted for guiding air to said at least one auxiliary storage device **(201), (202)** housed therein. In one embodiment, said at least a portion of said pair of front and rear walls **(205f), (205r)** comprises one or more mounting portions **(200d), (200e)** fixedly attached to at least a portion thereof. According to the invention, said at least one supporting structure **(200)** is configured for being removably mounted on at least a portion of said swing arm **(10)** through said at least one mounting boss **(12), (13)** (shown in **Fig.4**). In one embodiment, said at least one auxiliary energy storage device **(201), (202)** is adapted to supply a secondary power to the electric motor **(5a)** and said at least one primary energy storage device **(300).** As per another embodiment, a controller (not shown) mounted on at least a portion of the vehicle for controlling the energy supply to the powertrain for the vehicle. The controller is configured to determine said at least one enrgy storage device of said one or more energy storage devices **(300), (201), (202)** to be referred to as the primary storage unit based on the requirements. Additionally, the regenerative energy may be directed by the controller to said one or more energy storage devices **(300), (201), (202).**

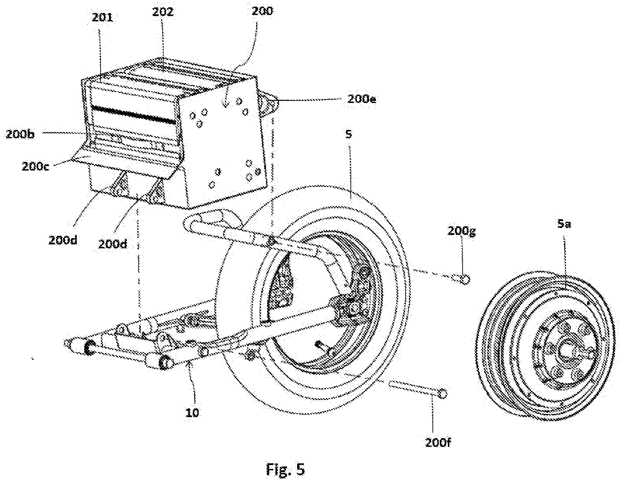

**Fig.4** and **Fig.5** illustrates an exploded view of said at least one supporting structure **(200)** being removably mounted on the swing arm **(10)** though said at least one mounting boss **(12), (13).** In one embodiment, said swing arm **(10)** is journaled to the frame **(2)** and adapted to support the rear wheel **(5).** The swing arm **(10)** comprises a pair of lateral support portions **(11a), (11b)** surrounding a pivot **(11),** a first arm portion **(10a)** extending rearwardly from one lateral support portion **(11a)** of the pair of lateral support portions **(11a), (11b),** to a position along one lateral side of the rear wheel **(5),** a second arm portion **(10b)** extending rearwardly from other lateral support portion **(11a)** of the pair of lateral support portions **(11a), (11b),** to a position along other lateral side of the rear wheel **(5),** a cross-portion **(10c)** extending in the widthwise direction of the vehicle **(1)** in order to connect the first arm portion **(10a)** to the second arm portion **(10b)** and one or more cross-members **(10d)** extending between said first arm portion **(10a)** and said second arm portion **(10b).** As per one embodiment, said swing arm **(10)** includes said at least one mounting boss **(12), (13)** fixedly attached to at least a portion thereof. As per one embodiment, a first mounting boss **(12)** of said at least one mounting boss **(12), (13)** is fixedly attached to at least a portion of said cross-members **(10d)** and a pair of second mounting boss **(13)** of said at least one mounting boss **(12), (13)** is fixedly attached to at least a portion of said cross-portions **(10c).** As per one embodiment, said vehicle **(100)** comprises said at least one supporting structure **(200)** adapted for housing said at least one auxiliary energy storage device **(201), (202).** In one embodiment, four of said at least one auxiliary energy storage device **(201), (202)** are accommodated in at least one supporting structure **(200).**

Further, as per one embodiment, said at least one supporting structure (200) is configured for being removably mounted on at least a portion of said swing arm **(10)** through said at least one mounting boss **(12), (13).** Further in one embodiment, said at least a portion of said pair of front and rear walls **(205f), (205r)** and said pair of left and right side walls **(206L) (206R)** is configured to form the first cooling air intake structure **(200a)** and the second cooling air intake structure **(200c),** respectively. In one embodiment, the first cooling air intake structure **(200a)** and the second cooling air intake structure **(200c)** are adapted for guiding air to said at least one auxiliary storage device **(202)** housed therein. In one embodiment, said at least a portion of said pair of front and rear walls **(205f), (205r)** (shown in Fig.2) comprises said one or more mounting portions **(200d), (200e)** fixedly attached to at least a portion thereof. In one embodiment, said one or more mounting portions **(200d), (200e)** includes at least one fastener receiving hole adapted to receive one or more fasteners **(200f), (200g)** for detachably securing said at least one supporting structure **(200)** to said swing arm **(10)** through said at least one mounting boss **(12), (13).**

Further in **Fig.4** and **Fig.5****,** said one or more energy storage devices **(201), (202), (300)** comprises of at least two configurations including a first configuration **(L), (H), (W)** (shown in Fig.4) and a second configuration. In one embodiment, said at least one primary energy storage device **(300)** and said at least one auxiliary energy storage device **(201), (202)** comprises of said first configuration **(L), (H), (W)** including a dimensional ratio between length **(L),** height **(H)** and width **(W)** which is equal to 1: 1.1: 3.1 with a tolerance range of ± 10%. In another embodiment of the present invention, said second configuration of said one or more energy devices **(201), (202), (300)** comprises a dimensional ratio between the length, the height and the width which is equal to 1: 1.05: 1.7 with a tolerance of ± 10%. As per the one embodiment of the present invention, at least four of said one or more energy storage devices **(201), (202), (300)** with the first configuration **(L), (H), (W)** ratio when taken together is equivalent in size to at least one of said one or more energy storage devices **(201), (202), (300)** with the second configuration as per another embodiment of the present invention.

It is advantageous to provide an improved pure electrically-driven saddle-type vehicle which can be readily derived from the conventional hybrid saddle-type vehicle without bringing any structural modification in the existing hybrid saddle-type vehicle layout. Further, as per one embodiment of the present invention, said improved pure electrically-driven saddle-type vehicle comprises a hub-type electric motor mounted at the hub of the rear wheel which removes power during regenerative braking to recharge said at least one primary energy storage device and / or said at least one auxiliary energy storage device being disposed on the vehicle. Further, advantageously, the mounting of said at least one supporting structure with said at least one auxiliary energy storage device provides an additional source of power for driving the vehicle electric motor, thereby providing long travelling range and improved performance for the vehicle.

## Claims

1. A saddle type vehicle (1), said saddle type vehicle (1) comprising:
a frame (2) extending along a vehicle longitudinal axis (AA);
a swing arm (10) journaled to the frame (2) and adapted to support a rear wheel (5), said swing arm (10) includes at least one mounting boss (12), (13) fixedly attached to at least a portion thereof;
an electric motor (5a) incorporated into a hub body of the rear wheel (5) and supplies a rotational driving force to the rear wheel (5); and
one out of an internal combustion engine (16) and at least one supporting structure (200);
wherein said at least one mounting boss (12), (13) of said swing arm (10) is configured to removably mount:
said internal combustion engine (16), and
said at least one supporting structure (200) when said internal combustion engine (16) is detached from said swing arm (10);
wherein said saddle type vehicle (1) is configured for being retrofitted with said at least one supporting structure (200) upon said internal combustion engine (16) being detached from said swing arm (10),
said at least one supporting structure (200) being adapted for housing one or more energy storage devices (201), (202), (300), and said at least one supporting structure (200) comprises one or more mounting portions (200d), (200e) integrally formed to at least a portion thereof;
and
said at least one supporting structure (200) being removably mounted through said one or more mounting portions (200d), (200e), to said at least one mounting boss (12), (13) of said swing arm (10).

2. The saddle-type vehicle (1) as claimed in claim 1, wherein said at least one supporting structure (200) includes a bottom wall (204), a pair of left and right side walls (206L), (206R) extending upward from two respective ends of said bottom wall (204) in the vehicle longitudinal axis (AA), a pair of front and rear walls (205f, 205r) extending upward from other two respective ends of said bottom wall (204) in a vehicle width direction and an open top (203).

3. The saddle-type vehicle (1) as claimed in claim 2, wherein said bottom wall (204), said pair of left and right side walls (206L), (206R) and said pair of front and rear walls (205f, 205r) forms a housing portion (203a) structured to hold said one or more energy storage devices (201), (202), (300) therein and said open top (203) is configured for accessing said one or more energy storage devices (201), (202), (300) being enclosed in said housing portion (203a).

4. The saddle-type vehicle (1) as claimed in claim 1, wherein said at least one supporting structure (200) comprises at least one holder portion (200b) being integrally formed with at least a portion of one of said pair of front and rear side walls (205f, 205r) of said at least one supporting structure (200).

5. The saddle-type vehicle (1) as claimed in claim 1 or claim 2, wherein at least a portion of said pair of front and rear walls (205f, 205r) and said pair of left and right side walls (206L) (206R) is configured to form a first cooling air intake structure (200a) and a second cooling air intake structure (200c), respectively.

6. The saddle-type vehicle (1) as claimed in claim 5, wherein the first cooling air intake structure (200a) and the second cooling air intake structure (200c) are adapted for guiding air to said one or more energy storage devices (201), (202), (300) housed therein.

7. The saddle-type vehicle (1) as claimed in claim 1, wherein
said swing arm (10) comprises a first arm portion (10a), a second arm portion (10b), a cross portion (10c) and one or more cross members (10d), a first mounting boss (12), a second mounting boss (13) of said at least one mounting boss (12), (13);
wherein
said cross-portion (10c) extends in the width wise direction of the vehicle (1) in order to connect the first arm portion (10a) to the second arm portion (10b) and one or more cross-members (10d) extends between said first arm portion (10a) and said second arm portion (10b);
the first mounting boss (12) of said at least one mounting boss (12), (13) being attached to at least a portion of said one or more cross-members (10d); and
a pair of second mounting boss (13) of said at least one mounting boss (12), (13) being fixedly attached to at least a portion of said cross-portions (10c);
and
said one or more mounting portions (200d), (200e) includes at least one fastener receiving hole adapted to receive one or more fasteners (200f), (200g) for detachably securing said at least one supporting structure (200) to said swing arm (10) through said at least one mounting boss (12), (13).

8. The saddle-type vehicle (1) as claimed in claim 1, wherein said one or more energy storage devices (201), (202), (300) comprises of at least two configuration including a first configuration (L), (H), (W) and a second configuration.

9. The saddle-type vehicle (1) as claimed in claim 8, wherein said first configuration (L), (H), (W) of said one or more energy storage devices (201), (202), (300) comprises a dimensional ratio between length (L), height (H), and width (W) which is equal to 1: 1.1: 3.1 with a tolerance range of± 10%.

10. The saddle-type vehicle (1) as claimed in claim 9, wherein said second configuration of said one or more energy devices (201), (202), (300) comprises a dimensional ratio between length, height, and width which is equal to 1: 1.05:.7 with a tolerance of± 10%.

11. The saddle-type vehicle (1) as claimed in claim 1, wherein said one or more energy storage devices (201), (202), (300) includes at least one primary energy storage device (300) configured to supply a primary power to the electric motor (5a).

12. The saddle-type vehicle (1) as claimed in claim 11, wherein said at least one primary energy storage device (300) is disposed below at least a portion of said vehicle frame (2).

13. The saddle-type vehicle (1) as claimed in claim 11, wherein said one or more energy storage devices (300), (201), (202) includes at least one auxiliary energy storage device (201), (202) adapted to supply a secondary power to the electric motor (5a) and said at least one primary energy storage device (300).

14. The saddle-type vehicle (1) as claimed in claim 13, wherein said at least one primary energy storage device (300) and said at least one auxiliary energy storage device (201), (202) are rechargeable batteries.

15. The saddle-type vehicle (1) as claimed in claim 13, wherein said at least one primary energy storage device (300) and said at least one auxiliary energy storage device (201), (202) are disposed in a line along a front-rear direction of said vehicle (1).

## Patentansprüche

1. Sattel-Fahrzeug (1), wobei das Sattel-Fahrzeug (1) aufweist:
einen Rahmen (2), der sich entlang einer Fahrzeug-Längsachse (AA) erstreckt;
einen Schwingarm (10), der am Rahmen (2) angelenkt ist und zum Tragen eines Hinterrads (5) ausgelegt ist, wobei der Schwingarm (10) zumindest einen an zumindest einem Teilbereich desselben befestigten Befestigungsvorsprung (12), (13) aufweist;
einen Elektromotor (5a), der in einen Nabenkörper des Hinterrads (5) einbezogen ist und eine Drehantriebskraft auf das Hinterrad (5) ausübt; und
eines von einem Verbrennungsmotor (16) und zumindest einer Tragestruktur (200);
wobei
der zumindest eine Befestigungsvorsprung (12), (13) des Schwingarms (10) ausgebildet ist zum abnehmbaren Befestigen von:
dem Verbrennungsmotor (16) und
der zumindest einen Tragestruktur (200), wenn der Verbrennungsmotor (16) vom Schwingarm (10) abgenommen ist;
wobei das Sattel-Fahrzeug (1) mit der zumindest einen Tragestruktur (200) nach dem Abnehmen des Verbrennungsmotors (16) von dem Schwingarm (10) nachrüstbar ausgebildet ist,
die zumindest eine Tragestruktur (200) dazu eingerichtet ist, eine oder mehrere Energiespeichervorrichtungen (201), (202), (300) aufzunehmen und die zumindest eine Tragestruktur (200) einen oder mehrere Befestigungsbereiche (200d), (200e) aufweist, die mit zumindest einem Teil von ihr einstückig ausgebildet sind; und
die zumindest eine Tragestruktur (200) durch den bzw. die Befestigungsbereiche (200d), (200e) an dem zumindest einen Befestigungsvorsprung (12), (13) des Schwingarms (10) abnehmbar befestigt ist.

2. Sattel-Fahrzeug (1) nach Anspruch 1, wobei die zumindest eine Tragestruktur (200) eine Bodenwand (204), ein Paar Seitenwände links und rechts (206L) (206R), die von je einem von zwei Enden der Bodenwand (204) in der Fahrzeug-Längsachse (AA) nach oben verlaufen, ein Paar Wände vorder- und rückseitig (205f, 205r), die von je einem von zwei anderen Enden der Bodenwand (204) in Fahrzeugquerrichtung nach oben erstrecken, und eine offene Oberseite (203) aufweist.

3. Sattel-Fahrzeug (1) gemäß Anspruch 2, wobei die Bodenwand (204), das Paar Seitenwände links und rechts (206L), (206R) und das Paar Wände vorder- und rückseitig (205f, 205r) einen Gehäusebereich (203a) bilden, der zum Aufnehmen der Energiespeichervorrichtung(en) (201), (202), (300) gestaltet ist, und die offene Oberseite (203) für den Zugang zu der bzw. den Energie-speichervorrichtung(en) (201), (202), (300), die in dem Gehäusebereich (203a) untergebracht sind, eingerichtet ist.

4. Sattel-Fahrzeug (1) nach Anspruch 1, wobei die zumindest eine Tragestruktur (200) zumindest einen Halterbereich (200b) aufweist, der einstückig mit zumindest einem Teilbereich einer der beiden vorder- bzw. rückseitigen Seitenwände (205f, 205r) der zumindest einen Tragestruktur (200) ausgebildet ist.

5. Sattel-Fahrzeug (1) nach Anspruch 1 oder 2, wobei zumindest ein Teil des Paares Wände vorder- und rückseitig (205f, 205r) und des Paares Seitenwände links und rechts (206L) (206R) dazu eingerichtet ist, jeweils eine erste Kühlluft-Ansaugstruktur (200a) und eine zweite Kühlluft-Ansaugstruktur (200c) zu bilden.

6. Sattel-Fahrzeug (1) nach Anspruch 5, wobei die erste Kühlluft-Ansaugstruktur (200a) und die zweite Kühlluft-Ansaugstruktur (200c) dazu ausgelegt sind, Luft zu der bzw. den darin untergebrachten Energiespeichervorrichtungen (201), (202), (300) zu leiten.

7. Sattel-Fahrzeug (1) nach Anspruch 1, wobei
der Schwingarm (10) einen ersten Armabschnitt (10a), einen zweiten Armabschnitt (10b), einen Querabschnitt (10c) und ein oder mehrere Querelemente (10d), einen ersten Befestigungsvorsprung (12), einen zweiten Befestigungsvorsprung (13) des zumindest einen Befestigungsvorsprungs (12), (13) aufweist;
wobei
der Querabschnitt (10c) in Querrichtung des Fahrzeugs (1) verläuft, zum Verbinden des ersten Armabschnitts (10a) mit dem zweiten Armabschnitt (10b), und ein oder mehrere Querelemente (10d) zwischen dem ersten Armabschnitt (10a) und dem zweiten Armabschnitt (10b) verlaufen;
wobei der erste Befestigungsvorsprung (12) des zumindest einen Befestigungsvorsprungs (12), (13) an zumindest einem Teil des zumindest einen Querelements (10d) angebracht ist; und
ein Paar zweiter Befestigungsvorsprünge (13) des zumindest einen Befestigungsvorsprungs (12), (13) an zumindest einem Abschnitt der Querabschnitte (10c) befestigt ist;
und
der bzw. die Befestigungsbereiche (200d), (200e) zumindest ein Befestigungselement-Aufnahmeloch aufweisen, das zum Aufnehmen eines oder mehrerer Befestigungselemente (200f), (200g) eingerichtet ist, um die mindestens eine Tragestruktur (200) über den zumindest einen Befestigungsvorsprung (12), (13) lösbar an dem Schwingarm (10) zu befestigen.

8. Sattel-Fahrzeug (1) nach Anspruch 1, wobei die eine oder mehreren Energiespeichervorrichtungen (201), (202), (300) zumindest zwei Konfigurationen aufweisen, einschließlich einer ersten Konfiguration (L), (H), (W) und einer zweiten Konfiguration.

9. Sattel-Fahrzeug (1) nach Anspruch 8, wobei die erste Konfiguration (L), (H), (W) der Energiespeichervorrichtung(en) (201), (202), (300) ein Größenverhältnis zwischen Länge (L), Höhe (H) und Breite (W) gleich 1 : 1,1 : 3,1 mit einer Toleranz von ±10 % aufweist.

10. Sattel-Fahrzeug (1) nach Anspruch 9, wobei die zweite Konfiguration der Energiespeicher-vorrichtung(en) (201), (202), (300) ein Größenverhältnis zwischen Länge, Höhe und Breite gleich 1 : 1,05 : 0,7 mit einer Toleranz von ±10 % aufweist.

11. Sattel-Fahrzeug (1) nach Anspruch 1, wobei die Energiespeichervorrichtung(en) (201), (202), (300) zumindest eine Primärenergie-Speichervorrichtung (300) aufweisen, die zum Versorgen des Elektromotors (5a) mit Primärenergie eingerichtet ist.

12. Sattel-Fahrzeug (1) nach Anspruch 11, wobei die mindestens eine Primärenergie-Speichervorrichtung (300) unter zumindest einem Teil des Fahrzeugrahmens (2) angeordnet ist.

13. Sattel-Fahrzeug (1) nach Anspruch 11, wobei die Energiespeichervorrichtung(en) (300), (201), (202) zumindest eine Hilfsenergie-Speichervorrichtung (201), (202) aufweisen, die dazu ausgelegt ist, eine Sekundärenergie dem Elektromotor (5a) und der zumindest einen Primärenergie-Speichervorrichtung (300) zuzuführen.

14. Sattel-Fahrzeug (1) nach Anspruch 13, wobei die zumindest eine Primärenergie-Speichervorrichtung (300) und die zumindest eine Hilfsenergie-Speichervorrichtung (201), (202) wiederaufladbare Batterien sind.

15. Sattel-Fahrzeug (1) nach Anspruch 13, wobei die zumindest eine Primärenergie-Speichervorrichtung (300) und die zumindest eine Hilfsenergie-Speichervorrichtung (201), (202) in einer Linie entlang einer Richtung von Vorne nach Hinten des Fahrzeugs (1) angeordnet sind.

## Revendications

1. Véhicule du type selle (1), ledit véhicule du type selle (1) comprenant :
un châssis (2) s'étendant le long d'un axe longitudinal (AA) du véhicule ;
un bras oscillant (10) articulé sur le châssis (2) et adapté pour supporter une roue arrière (5), ledit bras oscillant (10) incluant au moins un bossage de montage (12), (13) fixé de manière rigide à au moins une partie de celui-ci ;
un moteur électrique (5a) incorporé dans un corps de moyeu de la roue arrière (5) et fournissant une force d'entraînement en rotation à la roue arrière (5) ; et
un respectivement d'un moteur à combustion interne (16) et au moins une structure de support (200) ;
dans lequel
ledit au moins un bossage de montage (12), (13) dudit bras oscillant (10) est configuré pour monter de manière amovible :
ledit moteur à combustion interne (16), et
ladite au moins une structure de support (200) lorsque ledit moteur à combustion interne (16) est détaché dudit bras oscillant (10) ;
ledit véhicule du type selle (1) étant configuré pour être réaménagé avec ladite au moins une structure de support (200) lorsque ledit moteur à combustion interne (16) est détaché dudit bras oscillant (10),
ladite au moins une structure de support (200) étant adaptée pour loger un ou plusieurs dispositifs de stockage d'énergie (201), (202), (300), et ladite au moins une structure de support (200) comprend une ou plusieurs parties de montage (200d), (200e) formées d'un seul tenant avec au moins une partie de celle-ci ; et
ladite au moins une structure de support (200) étant montée, de manière amovible par l'intermédiaire de ladite ou lesdites parties de montage (200d), (200e), audit au moins un bossage de montage (12), (13) dudit bras oscillant (10).

2. Véhicule du type selle (1) selon la revendication 1, dans lequel ladite au moins une structure de support (200) comprend une paroi inférieure (204), une paire de parois latérales gauche et droite (206L), (206R) s'étendant vers le haut à partir des deux extrémités respectives de ladite paroi inférieure (204) dans l'axe longitudinal (AA) du véhicule, une paire de parois avant et arrière (205f, 205r) s'étendant vers le haut à partir des deux autres extrémités respectives de ladite paroi inférieure (204) dans le sens de la largeur du véhicule, et une partie supérieure ouverte (203).

3. Véhicule du type selle (1) selon la revendication 2, dans lequel ladite paroi inférieure (204), ladite paire de parois latérales gauche et droite (206L), (206R) et ladite paire de parois avant et arrière (205f, 205r) forment une partie de boîtier (203a) structurée pour contenir ledit ou lesdits dispositifs de stockage d'énergie (201), (202), (300) et ladite partie supérieure ouverte (203) est configurée pour permettre l'accès audit ou auxdits dispositifs de stockage d'énergie (201), (202), (300) enfermés dans ladite partie de boîtier (203a).

4. Véhicule du type selle (1) selon la revendication 1, dans lequel ladite au moins une structure de support (200) comprend au moins une partie de support (200b) formée d'un seul tenant avec au moins une partie de l'une desdites paires de parois latérales avant et arrière (205f, 205r) de ladite au moins une structure de support (200).

5. Véhicule du type selle (1) selon la revendication 1 ou 2, dans lequel au moins une partie de ladite paire de parois avant et arrière (205f, 205r) et ladite paire de parois latérales gauche et droite (206L) (206R) est configurée pour former respectivement une première structure d'admission d'air de refroidissement (200a) et une deuxième structure d'admission d'air de refroidissement (200c).

6. Véhicule du type selle (1) selon la revendication 5, dans lequel la première structure d'admission d'air de refroidissement (200a) et la deuxième structure d'admission d'air de refroidissement (200c) sont adaptées pour guider l'air vers ledit ou lesdits dispositifs de stockage d'énergie (201), (202), (300) logés à l'intérieur.

7. Véhicule du type selle (1) selon la revendication 1, dans lequel
ledit bras oscillant (10) comprend une première partie de bras (10a), une deuxième partie de bras (10b), une partie transversale (10c) et une ou plusieurs traverses (10d), un premier bossage de montage (12), un deuxième bossage de montage (13) dudit au moins un bossage de montage (12), (13) ;
dont
ladite partie transversale (10c) s'étend dans le sens de la largeur du véhicule (1) afin de relier la première partie de bras (10a) à la deuxième partie de bras (10b) et une ou plusieurs traverses (10d) s'étendent entre ladite première partie de bras (10a) et ladite deuxième partie de bras (10b) ;
le premier bossage de montage (12) dudit au moins un bossage de montage (12), (13) étant fixé à au moins une partie de ladite ou desdites traverses (10d) ; et
une paire de deuxièmes bossages de montage (13) dudit au moins un bossage de montage (12), (13) étant fixés de manière rigide à au moins une partie desdites parties transversales (10c) ;
et
ladite ou lesdites parties de montage (200d), (200e) incluent au moins un trou de réception de fixation adapté pour recevoir une ou plusieurs fixations (200f), (200g) afin de fixer de manière amovible ladite au moins une structure de support (200) audit bras oscillant (10) par l'intermédiaire dudit au moins un bossage de montage (12), (13).

8. Véhicule du type selle (1) selon la revendication 1, dans lequel ledit ou lesdits dispositifs de stockage d'énergie (201), (202), (300) comprennent au moins deux configurations, à savoir une première configuration (L), (H), (W) et une deuxième configuration.

9. Véhicule du type selle (1) selon la revendication 8, dans lequel ladite première configuration (L), (H), (W) dudit ou desdits dispositifs de stockage d'énergie (201), (202), (300) comprend un rapport dimensionnel entre la longueur (L), la hauteur (H) et la largeur (W) qui est égal à 1 : 1,1 : 3,1 avec une plage de tolérance de ±10 %.

10. Véhicule du type selle (1) selon la revendication 9, dans lequel ladite deuxième configuration dudit ou desdits dispositifs d'énergie (201), (202), (300) comprend un rapport dimensionnel entre la longueur, la hauteur et la largeur qui est égal à 1 : 1,05 : 0,7 avec une tolérance de ±10 %.

11. Véhicule du type selle (1) selon la revendication 1, dans lequel ledit ou lesdits dispositifs de stockage d'énergie (201), (202), (300) comprennent au moins un dispositif de stockage d'énergie primaire (300) configuré pour fournir une puissance primaire au moteur électrique (5a).

12. Véhicule du type selle (1) selon la revendication 11, dans lequel ledit au moins un dispositif de stockage d'énergie primaire (300) est disposé sous au moins une partie dudit châssis de véhicule (2).

13. Véhicule du type selle (1) selon la revendication 11, dans lequel ledit ou lesdits dispositifs de stockage d'énergie (300), (201), (202) comprennent au moins un dispositif de stockage d'énergie auxiliaire (201), (202) adapté pour fournir une puissance secondaire au moteur électrique (5a) et audit au moins un dispositif de stockage d'énergie primaire (300).

14. Véhicule du type selle (1) selon la revendication 13, dans lequel ledit au moins un dispositif de stockage d'énergie primaire (300) et ledit au moins un dispositif de stockage d'énergie auxiliaire (201), (202) sont des batteries rechargeables.

15. Véhicule du type selle (1) selon la revendication 13, dans lequel ledit au moins un dispositif de stockage d'énergie primaire (300) et ledit au moins un dispositif de stockage d'énergie auxiliaire (201), (202) sont disposés en ligne dans le sens avant-arrière dudit véhicule (1).
